Europäisches Patentamt

European Patent Office

Office européen des brevets

(19)

(11) Publication number: **0 305 571 B1**

(12) ## EUROPEAN PATENT SPECIFICATION

(45) Date of publication of patent specification: **22.01.92** (51) Int. Cl.⁵: **F16N 21/04**

(21) Application number: **87112835.1**

(22) Date of filing: **02.09.87**

(54) Adapter for use with a lubrication fitting.

(43) Date of publication of application:
**08.03.89 Bulletin 89/10**

(45) Publication of the grant of the patent:
**22.01.92 Bulletin 92/04**

(84) Designated Contracting States:
**BE CH DE FR GB LI NL**

(56) References cited:
**CH-B- 441 892          FR-A- 748 626
FR-A- 1 583 409        GB-A- 188 926
GB-A- 695 656          US-A- 1 575 755
US-A- 1 637 325        US-A- 2 040 008
US-A- 2 397 342**

(73) Proprietor: **Scheindel Associates, Inc.**

**Randolph Center Vermont 05061(US)**

(72) Inventor: **Scheindel, Christian
Star Route, Randolph Center
Vermont 05032(US)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to an adapter for use with a lubrication fitting according to the preamble of claim 1.

An adapter of this type is known from US-A-1 575 755 or FR-A-748 626.

From these publications an adapter for a lubrication fitting is known, in the case of which the fixing and guiding means (e.g. the springs) for a pin has a very complex design and, correspondingly, the production is very expensive.

Moreover, the movable support of the central pin cannot withstand to great lateral forces which are likely to occur when the adapter is unexactly put onto the lubrication fitting. Hence, the pin can be pulled out, so that these known adapters have no sufficient ruggedness.

It is the object of the present invention to provide an adapter according to the preamble of claim 1 which is easy and cheap in production and which shows little wear during use.

According to the present invention this object is solved by the advantageous measures as indicated in the characterizing portion of claim 1.

Hence, according to the present invention, the diameter of the pin is smaller than the diameter of the opening of the lubrication fitting, whereby the pin is fixed to a separating disc which is mounted to the tubular body and is provided with a plurality of openings for allowing the fluid to flow into the lubrication fitting. Due to these advantageous measures the pin does not have to be movably supported, so that it is able to withstand great lateral forces, the adapter having an excellent ruggedness. Moreover, the adapter has a rather simple construction which results in very low production costs.

The ruggedness of the adapter can even be enlarged by rounding the top end of the pin, as is indicated in claim 2. This is because the lateral forces during the putting on of the adapter are reduced by the rounded top end.

According to the advantageous development as indicated in claim 3 it is possible to form an annular shoulder between the top end and the separating disc of the tubular body, the dimension and the slope of the shoulder being such that it prevents the fluid from flowing past the lubrication fitting. Additionally this shoulder acts as a stop defining the distance which the flow restrictor is moved.

According to the advantageous developments as indicated in claims 4 to 6 it is possible to shape and design the top end of the tubular body such that it can receive a ball-shaped head of the lubrication fitting while allowing a restricted angular movement between the lubrication fitting and the tubular body. It moreover is possible to design the tubular body such that the ball-shaped head of the lubrication fitting is received in a snap-fit manner. In this case it is advantageous that the top end of the tubular body includes an angle stop proximate the top end to limit angular movement of the adapter and the lubrication fitting. By this the danger of breaking the pin is still reduced.

In case of supplying the fluid by means of a dispensating apparatus it is advantageous according to claim 10 to provide an annular projection on the bottom end of the tubular body which is capable of acting as a stop to restrict motion of the adapter when it is connected to the dispensating apparatus.

Advantageous dimensions of the adapter according to the present invention are indicated in claims 7 to 9.

In the following the present invention will be described in more detail by way of two preferred embodiments with reference to the accompanying drawings, in which:

Fig.1 is a sectional view of a first embodiment of the adapter,

Fig.2 is a top plan view of the first embodiment,

Fig.3 is a sectional view of a second embodiment of the adapter,

Fig.4 and 5 are elevational perspective views of the second embodiment, wherein the adpater is partially cut away to show the pin and the ball of the lubrication fitting, and

Fig.6 shows the adapter being mounted on a dispensating apparatus.

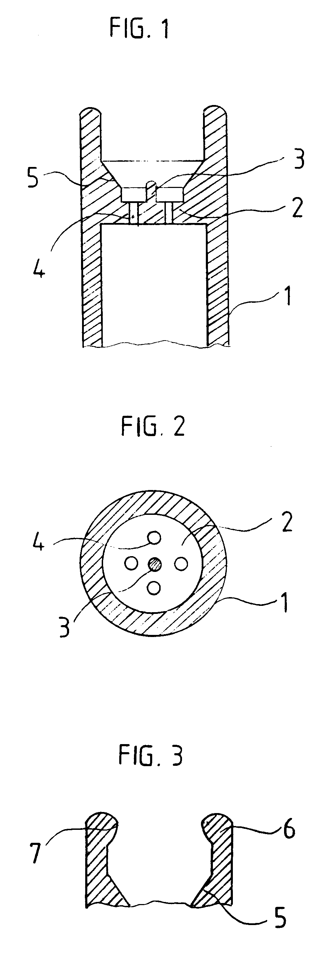

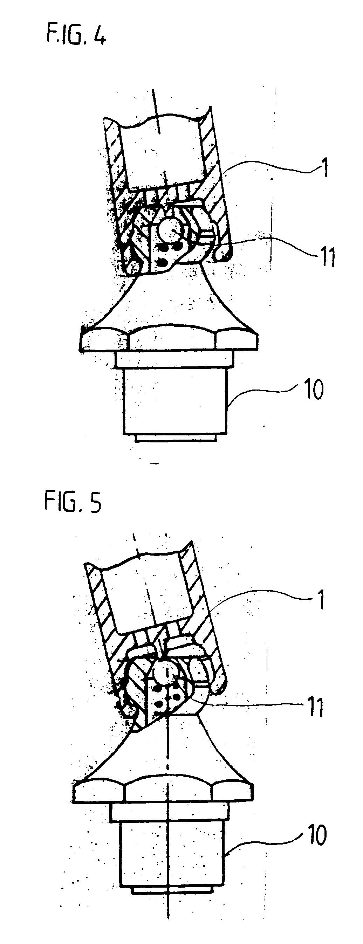

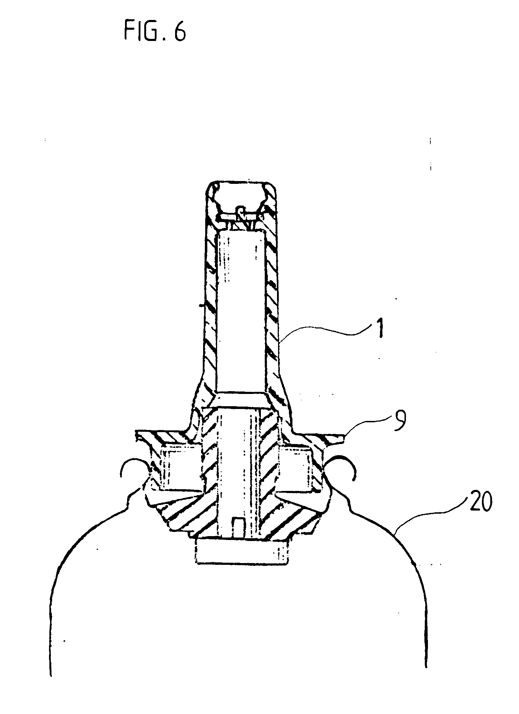

According to the sectional view shown in Fig.1 a first embodiment of the adapter has a generally tubular body 1. In Fig.1 there is shown only the top end of the adapter which is shaped and dimensioned to removably receive the output port of a lubrication fitting 10 which, e.g., is shown in Fig.4 and 5. Near the top end there is mounted a separating disc 2 to the tubular body 1. The separating disc 2 is provided with a plurality of openings 4 which are located around a central pin 3, as can be best seen from Fig.2 in which four openings 4 are shown. The diameter of the pin 3 is smaller, preferably one half of the diameter of the opening of the lubrication fitting. The top end of the pin 3 is rounded, thereby allowing the restrictor of the lubrication fitting 10 to be opened from any angle. Moreover, the lateral forces during the engaging of the adapter are reduced, by which a possible breaking of the pin 3 can be avoided.

Between the top end of the tubular body 1 and the separating disc 2 is formed an annular shoulder 5 such that the diameter of the tubular body 1 is conically decreasing from the top end thereof to the separating disc 2. Depending on the form and the dimension of the lubrication fitting the dimension and the slope of the shoulder 5 is designed such that it prevents the fluid from flowing past the lubrication fitting 10. Furthermore the shoulder 5 is defining the distance which the flow restrictor of the lubrication fitting is moved. It has been found that the slope of the shoulder 5 is preferably 60° with a surface area long enough to maintain a seal up to a 15° to a 20° angle between the adapter and the head of the lubrication fitting 10.

In Fig.3 there is shown only the most upper part of a second embodiment of the adapter accoridng to the present invention, the parts which are not shown being identical to the corresponding parts of the first embodiment shown in Fig.1 and 2. This second embodiment differs from the first embodiment in that the most top end of the tubular body 1 is shaped and designed to receive a lubrication fitting which, as the lubrication fitting shown in Fig.4 and 5, has a ball-shaped head. By means of an appropriately designed annular angle stop 7 it is achieved that the angular movement between the adapter and the head of the lubrication fitting 10 is limited. It has been found that it is advantageous to limit the angular movement to approximately 15° to 20°.

According to Fig.3 the top end 6 of the tubular body 1 is designed such that the ball-shaped head of the lubrication fitting 10 is received in a snap-fit manner. By this the adapter is more securely connected to the lubrication fitting 10. In this case the angle stop 7 has the effect to disengage the adapter from the lubrication fitting at the above mentioned angle of preferably 15° to 20°.

In the following the operation of the adapter will be described in detail with reference to Fig.4 and 5 in which, by way of example, is shown the adapter according to the second embodiment connected to a lubrication fitting 10. The lubrication fitting 10 includes a flow restrictor in the form of a ball 11 which is biased to a closed position by means of a helical spring indicated by several points. To lubricate a bearing, on which the lubrication fitting 10 is mounted, it is necessary to move the ball 11 from this closed position to an open position so that grease or another lubrication fluid can flow through the fitting 10 onto the bearing which must be greased or lubricated from time to time in order to work efficiently.

As can be seen from Fig.4 the adapter is connected to the lubrication fitting 10 by snap-fitting it onto the ball-shaped head of the lubrication fitting 10. By this the rounded top end of the pin 3 is engaging the ball 11 and forces it against the biasing of the spring a certain distance into the inner of the opening of the fitting 10.

The opening of the fitting 10 hence is opened, so that the grease can flow through the the openings 4 into the fitting, thereby greasing the bearing. The distance by which the ball 11 is moved is defined by the dimension of the shoulder 5, as has already been described. By being pressed against the outer surface of the ball-shaped head the shoulder 5 moreover hinders the grease which is flowing through the openings 4 from flowing to the outside.

In Fig.4 the adapter is shown being connected to the lubrication fitting at an angle of about 5°, whereas in Fig.5 the angle is about 15°.

According to the schematic illustration in Fig.6, in some cases it is advantageous to use the adapter with a dispensating apparatus 20 which is containing the grease. The apparatus 20 is placed into its lubricating position for example by pressing down on a valve in an axial direction. In this situation, it is preferable to provide the adapter with an annular projection 9 near the bottom end of the tubular body. This projection 9 acts as a stop to restrict downward motion of the valve resp. of the adapter during the dispensing of grease from the container of the apparatus 20. The outer surface of the bottom end of the tubular body is designed such that the adapter is insertable in an opening of the dispensating apparatus 20.

This type of dispensating apparatus is preferably used when a large number of lubrication fittings positioned at eye level are to be lubricated. In this situation, there will be used the first embodiment of the adapter as shown in Fig.1 which is not snapped onto the head of the lubrication fitting.

In other cases, for example when lubricating the bearings of cars, it may be preferable to use the second embodiment of the adapter which is snapped onto the lubrication fitting. In that case the grease flow will not be activated by pushing straight on the valve but rather will be activated in the following manner: the adapter is slipped on to the lubrication fitting 10 holding the ball 11 in its open position without a continuous force being applied by the operator. The grease dispensating apparatus 20 can then be operated from a locate location being connected to the adapter by a hose (not shown).

According to the present invention, the person who is lubricating the bearing will be able to easily move the ball 11 from its normally closed position to its open position by means of the pin 3 of the adapter. While the pin 3 is holding the ball 11 in its open position the grease can easily be dispensed onto the bearing through the fitting 10. By this it is not necessary to unseat the ball by the pressure of grease in the dispensating apparatus 20. In fact, the pressure which is necessary to do so is so high that a lot of dispensating apparatuses will not be able to open the ball 11 without the adapter according to the present invention.

In a typical fitting, the diameter of the opening is about 1,58 mm and the diameter of the ball 11 is somewhat greater. The diameter of the pin 3, consequently, is about 0,75 mm. The ball 11 is moved by the pin 3 for about 0,5 mm.

The adapter can be made of any rigid material which offers enough strength. The material preferably used for the adapter is acetal plastic. It furthermore is possible to use aluminium or any other rigid metal like high chrome steel (music wire) or plastic.

The adapter preferably is made as one-piece. It, however, is possible to make the adapter in two or more pieces, where the pin 3 is made separately and combined with the other part or parts.

## Claims

1. An adapter for use with a lubrication fitting (10) of the type which includes a flow restrictor (11) normally biased to a closed position to restrict the flow of fluid, the adapter comprising a pin (3) centrally positioned in a tubular body (1) which extends substantially along a vertical axis and having a top end and a bottom end, said pin (3) being adapted to enter an opening of said lubrication fitting (10) to move said flow restrictor (11) from its normally closed position to an open position in which fluid can flow, and said pin (3) is arranged to a separating disc (2) which is mounted in a fixed position to said tubular body (1), said disc (2) is provided with a plurality of openings (4) for allowing said fluid to flow into said lubrication fitting (10), and between said top end and said disc (2) of said tubular body (1) is formed an annular shoulder (5), the dimension of said shoulder (5) being such that it prevents said fluid from flowing past said lubrication fitting (10) and it acts as a stop defining the distance over which said flow restrictor (11) may be moved, **characterized in** that said pin (3) and said shoulder (5) are stationary mounted with respect to said tubular body (1).

2. An adapter according to claim 1, characterized in that the top end of said pin (3) is rounded.

3. An adapter according to claim 1 or 2, **characterized in** that said shoulder (5) is designed with a slope such that the shoulder (5) conically widens in the direction to said top end of said tubular body (1).

4. An adapter according to any one of the preceding claims, characterized in that said top end of said tubular body (1) is shaped and designed to receive a ball-shaped head of said lubrication fitting (10) while allowing a restricted angular movement between said lubrication fitting (10) and said tubular body (1).

5. An adapter according to claim 4, characterized in that said top end of said tubular body (1) is designed such that said ball-shaped head of said lubrication fitting (10) is received in a snap-fit manner.

6. An adapter according to claim 4 or 5, characterized in that said top end of said tubular body (1) includes an angle stop (7) proximate said top end to limit angular movement of said adapter and said lubrication fitting (10).

7. An adapter according to claim 6, characterized in that said angle stop (7) is designed such that said lubrication fitting (10) is disengaged when the angle between it and said adapter is greater than 15° to 20°.

8. An adapter according to any one of the claims 3 to 7, characterized in that the slope of said shoulder (5) is approximately 60° with a surface area long enough to maintain a seal up to a 15° to 20° angle between said lubrication fitting (10) and said tubular body (1).

9. An adapter according to any one of the preceding claims, characterized in that the diameter of said pin (3) is about half of the diameter of said opening of said lubrication fitting (10).

10. An adapter according to any one of the preceding claims, characterized in that said bottom end of said tubular body (1) comprises an annular projection (9) capable of acting as a stop to restrict motion of said adapter when it is connected to a dispensating apparatus (20), the outer surface of said bottom end being designed to be insertable into an opening of said dispensating apparatus.

11. An adapter according to any one of the preceding claims, characterized in that the adapter is made of acetal plastic.

12. An adapter according to any one of the preceding claims, characterized in that the adapter is made as one-piece.

## Revendications

1. Adaptateur, pour utilisation avec une tête de graissage (10), du type comprenant un réducteur d'écoulement (11), normalement déplacé en position fermée de manière à limiter l'écoulement de fluide, l'adaptateur comprenant une tige (3), positionnée centralement dans un corps tubulaire (1) qui s'étend sensiblement sur un axe vertical et comportant une extrémité supérieure et une extrémité inférieure, ladite tige (3) étant adaptée pour entrer dans une ouverture de ladite tête de graissage (10), pour déplacer ledit réducteur d'écoulement (11), de sa position normalement fermée à une position ouverte dans laquelle ledit fluide peut s'écouler, et ladite tige (3) étant disposée sur un disque de séparation (2) monté en une position fixe sur ledit corps tubulaire (1), ledit disque (2) étant pourvu d'une pluralité d'ouvertures (4) de manière à permettre audit fluide de s'écouler dans ladite tête de graissage (10), et un épaulement annulaire (5) étant formé entre ladite extrémité supérieure et ledit disque (2) dudit corps tubulaire (1), épaulement dont la dimension est telle qu'il empêche ledit fluide de s'écouler pour quitter ladite tête de graissage (10) et agissant comme une butée qui définit la distance sur laquelle le réducteur d'écoulement (11) peut être déplacé, caractérisé en ce que ladite tige (3) et ledit épaulement (5) sont montés stationnaires par rapport audit corps tubulaire (1).

2. Adaptateur selon la revendication 1, caractérisé en ce que l'extrémité supérieure de ladite tige (3) est arrondie.

3. Adaptateur selon la revendication 1 ou 2, caractérisé en ce que ledit épaulement (5) est conçu avec une pente, de manière que l'épaulement (5) s'élargisse coniquement dans la direction de ladite extrémité supérieure dudit corps tubulaire (1)

4. Adaptateur selon l'une quelconque des revendications précédentes, caractérisé en ce que ladite extrémité supérieure dudit corps tubulaire (1) est formée et conçue pour recevoir la tête en forme de sphère appartenant à ladite tête de graissage (10), tout en permettant un débattement angulaire limité entre ladite tête de graissage (10) et ledit corps tubulaire (1).

5. Adaptateur selon la revendication 4, caractérisé en ce que ladite extrémité supérieure dudit corps tubulaire (1) est conçue de façon que ladite tête en forme de sphère de ladite tête de graissage (10) soit logée de façon encliquetée.

6. Adaptateur selon la revendication 4 ou 5, caractérisé en ce que ladite extrémité supérieure dudit corps tubulaire (1) comprend une butée angulaire (7) proche de ladite extrémité supérieure, pour limiter le débattement angulaire dudit adaptateur sur ladite tête de graissage (10).

(10).

7. Adaptateur selon la revendication 6, caractérisé en ce que ladite butée angulaire (7) est conçue de façon que ladite tête de graissage (10) soit dégagée lorsque l'angle entre cette dernière et ledit adaptateur est supérieur à 15° à 20°.

8. Adaptateur selon l'une quelconque des revendications 3 à 7, caractérisé en ce que la pente dudit épaulement (5) est d'à peu près 60°, avec une aire de surface suffisante pour maintenir une étanchéité jusqu'à un angle de 15° à 20° entre ladite tête de graissage (10) et ledit corps tubulaire (1).

9. Adaptateur selon l'une quelconque des revendications précédentes, caractérisé en ce que le diamètre de ladite tige (3) est d'à peu près la moitié du diamètre de ladite ouverture de ladite tête de graissage (10).

10. Adaptateur selon l'une quelconque des revendications précédentes, caractérisé en ce que ladite extrémité inférieure dudit corps tubulaire (1) comprend une saillie annulaire (9), pouvant agir comme une butée, pour limiter le déplacement dudit adaptateur lorsqu'il est raccordé à un appareil d'alimentation (20), la surface extérieure de ladite extrémité inférieure étant conçue pour pouvoir être insérée dans une ouverture dudit appareil d'alimentation.

11. Adaptateur selon l'une quelconque des revendications précédentes, caractérisé en ce que l'adaptateur est réalisé en matière synthétique acétale.

12. Adaptateur selon l'une quelconque des revendications précédentes, caractérisé en ce que l'adaptateur est réalisé d'une seule pièce.

**Patentansprüche**

1. Adapter zum Gebrauch an einer Schmiernippelart (10), die einen Flußbegrenzer (11) umfaßt, der normalerweise in eine geschlossene Position gedrückt wird, um den Durchfluß an Fluid zu begrenzen, wobei der Adapter einen Stift (3) umfaßt, der mittig in einem rohrförmigen Körper (1) angeordnet ist, der sich im wesentlichen entlang einer vertikalen Achse erstreckt und der ein oberes und ein unteres Ende aufweist, wobei der Stift (3) so angepaßt ist, daß er in eine Öffnung des Schmiernippels (10) eingeführt werden kann, um den Flußbegrenzer (11) von seiner normalerweise geschlossenen Position in eine geöffnete Position zu bewegen, in der Fluid fließen kann, und daß der Stift (3) an einer trennenden Platte (2) angeordnet ist, die an einer festgelegten Position am rohrförmigen Körper (1) befestigt ist, wobei die Platte (2) mit einer Vielzahl von Öffnungen (4) versehen ist, die es dem Fluid ermöglichen in den Schmiernippel (10) hinein zu fließen, und daß zwischen dem oberen Ende des rohrförmigen Körpers (1) und der Platte (2) eine ringförmige Schulter (5) ausgebildet ist, deren Ausdehnung so ist, daß ein Zurückfließen des Fluids vom Schmiernippel (10) verhindert wird und als ein Anschlag funktioniert, der die Strecke festlegt, über die der Flußbegrenzer (11) bewegt werden kann, **dadurch gekennzeichnet,** daß der Stift (3) und die Schulter (5) relativ zum rohrförmigen Körper (1) ortsfest befestigt sind.

2. Adapter nach Anspruch 1, **dadurch gekennzeichnet,** daß das obere Ende des Stifts (3) abgerundet ist.

3. Adapter nach Anspruch 1 oder 2, **dadurch gekennzeichnet,** daß die Schulter (5) mit einer Neigung versehen ist, so daß sich die Schulter (5) in Richtung zum oberen Ende des rohrförmigen Körpers (1) konisch erweitert.

4. Adapter nach einem der vorangehenden Ansprüche, **dadurch gekennzeichnet,** daß das obere Ende des rohrförmigen Körpers (1) so geformt und ausgebildet ist, daß es einen kugelförmigen Kopf des Schmiernippels (10) aufnehmen kann und daß eine winkelmäßig begrenzte Bewegung zwischen dem Schmiernippel (10) und dem rohrförmigen Körper (1) ermöglicht ist.

5. Adapter nach Anspruch 4, **dadurch gekennzeichnet,** daß das obere Ende des rohrförmigen Körpers (1) so ausgebildet ist, das der kugelförmige Kopf des Schmiernippels (10) in einer einrastenden Art und Weise aufgenommen wird.

6. Adapter nach Anspruch 4 oder 5, **dadurch gekennzeichnet,** daß das obere Ende des rohrförmigen Körpers (1) nahe dem oberen Ende einen Winkelanschlag (7) umfaßt, der die Bewegung des Adapters und des Schmiernippels (10) winkelmäßig begrenzt.

7. Adapter nach Anspruch 6, **dadurch gekennzeichnet,** daß der Winkelanschlag (7) so ausgebildet ist, daß der Schmiernippel (10) ausser Eingriff kommt, falls der Winkel zwischen dem Schmiernippel und dem Adapter größer als 15° bis 20° ist.

8. Adapter nach einem der Ansprüche 3 bis 7, **dadurch gekennzeichnet,** daß die Neigung der Schulter (5) annähernd 60° beträgt, mit einer Oberfläche, die lang genug ist, um eine Dichtheit bis zu einem Winkel von 15° bis 20° zwischen dem Schmiernippel (10) und dem rohrförmigen Körper (1) zu gewährleisten.

9. Adapter nach einem der vorangehenden Ansprüche, **dadurch gekennzeichnet,** daß der Durchmesser der Stifts (3) etwa halb so groß ist wie der Durchmesser der Öffnung des Schmiernippels (10).

10. Adapter nach einem der vorangehenden Ansprüche, **dadurch gekennzeichnet,** daß das untere Ende des rohrförmigen Körpers (1) einen ringförmigen Vorsprung (9) umfaßt, der als Anschlag dient, um die Bewegung des Adapters zu begrenzen, wenn er an eine Ausgabeeinrichtung (20) angeschlossen wird, und daß das untere Ende so ausgebildet ist, das es in eine Öffnung der Ausgabeeinrichtung (20) einsteckbar ist.

11. Adapter nach einem der vorangehenden Ansprüche, **dadurch gekennzeichnet,** daß der Adapter aus Acetalplastik besteht.

12. Adapter nach einem der vorangehenden Ansprüche, **dadurch gekennzeichnet,** daß der Adapter einstückig ausgebildet ist.

FIG. 1

FIG. 2

FIG. 3

F.IG. 4

FIG. 5

FIG. 6